# EUROPEAN PATENT APPLICATION

(11) **EP 4 693 484 A1**
(43) Date of publication of application: **11.02.2026**
(21) Application number: 24898302.5
(22) Date of filing: 18.11.2024
(51) Int. Cl.: H01M 4/505, H01M 4/525, H01M 4/131, H01M 10/052, H01M 4/36, H01M 4/02

(54) **CATHODE ACTIVE MATERIAL AND LITHIUM SECONDARY BATTERY COMPRISING SAME**

(30) Priority: 28.11.2023 KR 20230167660; 16.10.2024 KR 20240141045
(71) Applicant: ECOPRO BM CO., LTD., Cheongju-si, Chungcheongbuk-do 28116 (KR)
(72) Inventor: LIM, Ra Na, Cheongju-si, Chungcheongbuk-do 28116 (KR); JUNG, Hyun Su, Cheongju-si, Chungcheongbuk-do 28116 (KR); PARK, Eun Hee, Cheongju-si, Chungcheongbuk-do 28116 (KR); JEON, Se Hyeon, Cheongju-si, Chungcheongbuk-do 28116 (KR)
(74) Representative: Vossius & Partner Patentanwälte Rechtsanwälte mbB
(86) International application number: PCT/KR2024/096621
(87) International publication number: WO 2025/116710

(57) **Abstract**

The present invention relates to a positive electrode active material and a lithium secondary battery comprising the same. More specifically, the present invention relates to a positive electrode active material comprising a lithium manganese oxide in which lithium and manganese are present in excess, having an improved energy density per unit volume, and a lithium secondary battery comprising the same, thereby exhibiting enhanced electrochemical characteristics.

## Description

### BACKGROUND

### 1. Field of the Invention

The present invention relates to a positive electrode active material and a lithium secondary battery comprising the same. More specifically, the present invention relates to a positive electrode active material comprising a lithium manganese oxide in which lithium and manganese are present in excess, having an improved energy density per unit volume, and a lithium secondary battery comprising the same, thereby exhibiting enhanced electrochemical characteristics.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or an oxide in which Ni, Co, Mn or Al are composited.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while an LiNiO₂-based positive electrode active material exhibits a battery characteristic such as high discharge capacity, due to cation mixing between Li and a transition metal, it is difficult to synthesize the LiNiO₂-based positive electrode active material, thereby causing a big problem in rate performance.

In addition, depending on the intensity of such cation mixing, a large amount of Li by-products is generated. Most of the Li by-products include LiOH and Li₂CO₃, may cause gelation in the preparation of a positive electrode paste, or cause gas generation due to repeated charging/discharging after the manufacture of an electrode. In addition, residual Li₂CO₃ among the Li by-products increases cell swelling to act as a cause of degrading lifetime characteristics.

Various candidate materials for compensating for these shortcomings of conventional positive electrode active materials are being proposed.

In one example, there is on-going research to use an overlithiated lithium manganese-based oxide in which an excess of Mn among transition metals is included and a lithium molar content is higher than the sum of the molar contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to the excessive amount of Mn contained in the oxide, electrical conductivity is relatively low, and thus the rate characteristic2 of a lithium secondary battery using OLO are low. As such, when the rate performance is low, there is a problem in that charge/discharge capacity and lifetime efficiency (capacity retention) are degraded during the cycling of a lithium secondary battery.

In addition, in general, OLO has a drawback in that it exhibits a lower energy density per unit volume compared to high-Ni-type positive electrode active materials such as conventional commercialized ternary lithium composite oxides having a nickel-cobalt-manganese (NCM) or nickel-cobalt-aluminum (NCA) composition.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP is increasing (of course, relatively inexpensive LFP is still used to reduce costs).

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only subject to unstable supply, but also excessively expensive compared to other raw materials, a positive electrode active material with a new composition, which can reduce a cobalt content or exclude cobalt is needed.

Considering these circumstances, overlithiated lithium manganese-based oxide can meet the aforementioned market expectations, they still lack the electrochemical properties and stability required to replace high-Ni positive electrode active material like commercialized ternary lithium composite oxides with nickel-cobalt-manganese (NCM) or nickel-cobalt-aluminum (NCA) compositions.

For example, it has been described above that OLO has a drawback of low energy density per unit volume due to the composition of the material (including excess lithium) and its structural characteristics (high porosity within the particles).

Accordingly, in order to increase the insufficient volumetric energy density of OLO, the use of a positive electrode active material having a bimodal particle size distribution may be considered. However, in general, the particles constituting the precursor of OLO tend to grow into thick plate-like particles, and therefore, as the size of the secondary particles increases, the internal density increases, but performance may rather deteriorate due to low conductivity.

However, the inventors of the present invention have found that the shape of the primary particles constituting the lithium manganese-based oxide can be controlled depending on the synthesis conditions of the precursor of the lithium manganese-based oxide, and through this, the capacity characteristics and rate characteristics of the positive electrode active material containing relatively large secondary particles (for example, neutral particles and/or large particles having an average particle diameter of 5 µm or more) can be improved.

Accordingly, an object of the present invention is to provide a positive electrode active material comprising secondary particles (for example, neutral particles and/or large particles having an average particle diameter of 5 µm or more) in which the shape of primary particles constituting an overlithiated lithium manganese-based oxide is controlled, in order to improve the low energy density per unit volume of the overlithiated lithium manganese-based oxide.

Furthermore, another object of the present invention is to provide a lithium secondary battery using the positive electrode active material defined herein.

The objectives of the present invention are not limited to those mentioned above, and other objectives and advantages of the present invention not mentioned herein can be understood from the following description and will be more clearly understood by the embodiments of the present invention. Furthermore, it will readily be apparent that the objectives and advantages of the present invention can be achieved by the means and combinations set forth in the appended claims.

According to one aspect of the present invention for solving the above-described technical problems, there is provided a positive electrode active material comprising a lithium manganese-based oxide in which a phase belonging to a C2/m space group and a phase belonging to an R-3m space group are present as a solid solution.

In general, a ternary lithium composite oxide of a nickel-cobalt-manganese (NCM) composition or a nickel-cobalt-aluminum (NCA) composition, which is commercialized, exists as a single phase belonging to the R-3m space group, whereas the overlithiated lithium manganese-based oxide defined herein is characterized by being a solid solution in which a phase belonging to the C2/m space group and a phase belonging to the R-3m space group coexist.

The lithium manganese-based oxide has a secondary particle form in which a plurality of primary particles are aggregated, and at least a portion of the secondary particles may have an oriented structure in which the major axes of the primary particles are arranged from the center of the secondary particle toward the surface direction.

The major axes of the primary particles exhibiting the oriented structure may be formed to have an angle within +70°, +60°, +40°, +20°, or +10° with respect to a line connecting the center and the surface of the secondary particle.

The secondary particle may be divided into a core portion, in which the primary particles are randomly aggregated, and a shell portion, which is located outside the core portion and in which the primary particles exhibit the oriented structure.

In the shell portion, since the major axes of the primary particles are arranged from the center of the secondary particle toward the surface direction to exhibit the oriented structure, the proportion of the primary particles having the oriented structure among all the primary particles present in the shell portion may be 50% or more, 60% or more, 70% or more, 80% or more, 85% or more, or 90% or more.

In the core portion, since the primary particles are randomly aggregated rather than exhibiting a specific orientation, the proportion of the primary particles having the oriented structure among all the primary particles present in the core portion may be less than 50%.

In addition, the shapes of the primary particles present in the shell portion may differ from those of the primary particles present in the core portion.

For example, the ratio of the major axis length to the minor axis length (major axis length/minor axis length) of the primary particles present in the core portion, as observed from a cross-sectional SEM image of the secondary particle, may be smaller than the ratio of the major axis length to the minor axis length (major axis length/minor axis length) of the primary particles present in the shell portion.

The primary particles present in the shell portion may have a thin plate-like form, a thin rod-like form, or a fine needle-like form.

Accordingly, the surface shapes of the primary particles exposed on the surface of the secondary particle, as observed from a surface SEM image of the secondary particle, may have a major axis and a minor axis.

An average value of the ratio of the major axis length to the minor axis length (major axis length/minor axis length) of the surface shapes of the primary particles exposed on the surface of the secondary particle may be 1.5 or more and 9.0 or less, 1.6 or more and 8.0 or less, 1.7 or more and 7.0 or less, 1.8 or more and 6.0 or less, 1.9 or more and 5.7 or less, 2.0 or more and 5.5 or less, 2.1 or more and 5.3 or less, 2.2 or more and 5.2 or less, 2.3 or more and 5.1 or less, or 2.37 or more and 4.94 or less.

An average value of the ratio of the minor axis length to the major axis length (minor axis length/major axis length) of the surface shapes of the primary particles exposed on the surface of the secondary particle may be 0.2 or more and 0.5 or less, 0.21 or more and 0.49 or less, or 0.22 or more and 0.45 or less.

An average value of the major axis length of the surface shapes of the primary particles exposed on the surface of the secondary particle may be 150 nm or more and 350 nm or less, 160 nm or more and 320 nm or less, 170 nm or more and 290 nm or less, 180 nm or more and 270 nm or less, 190 nm or more and 260 nm or less, or 192 nm or more and 250 nm or less.

An average value of the minor axis length of the surface shapes of the primary particles exposed on the surface of the secondary particle may be 30 nm or more and 130 nm or less, 35 nm or more and 120 nm or less, 40 nm or more and 110 nm or less, or 47 nm or more and 105 nm or less.

The lithium manganese-based oxide is a composite oxide of lithium, nickel, and manganese, and the lithium manganese-based oxide may further include one or more elements selected from alkali metals, alkaline earth metals, transition metals other than nickel and manganese, post-transition metals, and metalloids.

The lithium manganese-based oxide defined herein may be represented by Chemical Formula 1 or Chemical Formula 2 below.

[Chemical Formula 1] Li(LiₐNi_{b}Co_{c}Mn_{d}M1ₑ)O_{2-f}X_{f}

In Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X is a halogen capable of substituting a portion of oxygen present in the lithium manganese-based oxide,
0<a≤0.7, 0≤b<0.5, 0≤c≤0.2, 0.5≤d<0.8, 0<e≤0.1, and 0≤f≤0.1.

[Chemical Formula 2] rLi₂MnO₃₋ₚXₚ·(1-r)LiᵤNi_{w}CoₓMn_{y}M2_{z}O_{2-p'}X'_{p'}

In Chemical Formula 2,
M2 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X and X' are each independently a halogen capable of substituting a portion of oxygen present in the lithium manganese-based oxide,
0.2<r≤0.7, 0<u≤1, 0≤w≤1, 0≤x≤0.2, 0.3<y<1, 0<z≤0.1, 0≤p≤0.1, and 0≤p'≤0.1.

In addition, according to another aspect of the present invention, there is provided a positive electrode comprising the above-described positive electrode active material.

Furthermore, according to still another aspect of the present invention, there is provided a lithium secondary battery in which the above-described positive electrode is used.

According to the present invention, it is possible to overcome the limitations of conventional overlithiated lithium manganese-based oxides, which have several disadvantages in terms of electrochemical characteristics and/or stability compared to commercialized ternary lithium composite oxides having a nickel-cobalt-manganese (NCM) or nickel-cobalt-aluminum (NCA) composition.

Specifically, according to the present invention, the shape of the primary particles constituting the lithium manganese-based oxide can be controlled depending on the synthesis conditions of the precursor of the lithium manganese-based oxide, and thereby, the capacity characteristics and rate characteristics of a positive electrode active material comprising relatively large secondary particles (for example, neutral particles and/or large particles having an average particle diameter of 5 µm or more) can be improved.

In particular, in the lithium manganese-based oxide according to the present invention, the primary particles existing on the surface of the secondary particles have a thin plate-like form, a thin rod-like form, or a fine needle-like form, thereby improving the capacity characteristics and rate characteristics of a lithium secondary battery using the lithium manganese-based oxide as a positive electrode active material.

Furthermore, when the lithium manganese-based oxide according to the present invention is used as neutral and/or large particles and mixed with a small-particle lithium manganese-based oxide to form a positive electrode active material having a bimodal or trimodal particle size distribution, the low energy density per unit volume of the lithium secondary battery can be further improved.

In addition, since the lithium manganese-based oxide according to the present invention has an oriented structure in which the major axes of the primary particles existing on the surface of the secondary particles are arranged from the center of the secondary particle toward the surface direction, the surface kinetic characteristics of the lithium manganese-based oxide can be improved.

Along with the above-described effects, the specific effects of the present invention will be described in detail below together with the specific embodiments for carrying out the invention.

### DETAILED DESCRIPTION OF EXEMPLARY EMBODIMENTS

For easier understanding of the present invention, certain terms are defined herein for convenience. Unless otherwise defined herein, scientific and technical terms used in the present invention will have meanings generally understood by those skilled in the art. In addition, unless otherwise specified in the context, it should be understood that the singular includes the plural, and the plural includes the singular. Amounts or ratios indicated herein are molar amounts or molar ratios, unless otherwise specified in the context.

Hereinafter, a positive electrode active material, which includes an overlithiated lithium manganese-based oxide, and a lithium secondary battery including the positive electrode active material according to some embodiments of the present invention will be described in more detail.

### Positive electrode active material

According to one aspect of the present invention, a positive electrode active material including a lithium manganese-based oxide in which a phase belonging to a C2/m space group and a phase belonging to an R-3m space group are present as a solid solution is provided.

The phase belonging to a C2/m space group and the phase belonging to a R-3m space group may be distinguished not only through the composition of each phase, but also by a peak specific to each phase during XRD analysis. For example, the specific peak for the phase belonging to a C2/m space group may appear in the area of 2θ=20.8±1°, and the specific peak for the phase belonging to a R-3m space group may appear in the area of 2θ=18.6±1°.

As the lithium manganese-based oxide is a composite oxide in which a phase belonging to a C2/m space group and a phase belonging to a R-3m space group are present as a solid solution, a phase belonging to a C2/m space group and a phase belonging to a R-3m space group coexist in the lithium manganese-based oxide. In other words, the lithium manganese-based oxide is a composite oxide comprising a phase belonging to a C2/m space group and a phase belonging to a R-3m space group. The phase belonging to a C2/m space group and the phase belonging to a R-3m space group can be considered to be dispersed in the remainder of the lithium manganese-based oxide. In addition, the lithium manganese-based oxide is different from a composite oxide having a spinel crystal structure belonging to an Fd-3m space group (e.g., LiMn₂O₄ or an oxide having a similar composition thereto).

The lithium manganese-based oxide may be a composite oxide of lithium, nickel, and manganese. In addition, the lithium manganese-based oxide may further include at least one element selected from an alkali metal, an alkaline earth metal, a transition metal other than nickel and manganese, a post-transition metal, and a metalloid.

The lithium manganese-based oxide may also be referred to as an overlithiated layered oxide (OLO) because the equivalent weight of lithium present in the lithium manganese-based oxide is larger than the sum of the equivalent weight of other transition metals (generally, when the molar ratio (Li/Metal molar ratio) of lithium to all metal elements, other than lithium, in the lithium manganese-based oxide is larger than 1).

In addition, the lithium manganese-based oxide is also referred to as an overlithiated layered oxide with excess manganese because the content of manganese present in the lithium manganese-based oxide is larger than the content of other transition metals.

Generally, considering that a commercially available ternary lithium composite oxide with a nickel-cobalt-manganese (NCM) or nickel-cobalt-aluminum (NCA) composition has a content of manganese among all metal elements, excluding lithium, of 20 mol% or less, the lithium manganese-based oxide has a relatively high proportion of manganese (e.g., 50 mol% or more, 52 mol% or more, 53 mol% or more, or 55 mol% or more) among all metal elements compared to the commercially-available ternary lithium composite oxide.

In addition, considering that a commercially-available ternary lithium composite oxide with a nickel-cobalt-manganese (NCM) or nickel-cobalt-aluminum (NCA) composition has a content of nickel among all metal elements, excluding lithium, of 60 mol% or more (80 mol% or more for the high-Ni type), the lithium manganese-based oxide has a relatively low proportion of nickel among all metal elements (e.g., less than 50 mol%, 48 mol% or less, 46 mol% or less, 45 mol% or less, 44 mol% or less, 42 mol% or less, or 40 mol% or less) compared to the commercially-available ternary lithium composite oxide.

There is also a difference in that the Li/Metal molar ratio measured from the lithium manganese-based oxide defined herein is larger than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. Meanwhile, the Li/Metal molar ratio of the lithium manganese-based oxide defined herein may be higher than 1, and preferably has a value ranging from 1.1 to 1.6, 1.1 to 1.5, 1.2 to 1.6, or 1.2 to 1.5.

Accordingly, in the present disclosure, the lithium manganese-based oxide may be defined as a composite oxide in which a content of manganese is 50 mol% or more among all metal elements excluding lithium, or may be defined as a composite oxide in which a content of manganese is 50 mol% or more among all metal elements excluding lithium and a content of nickel is less than 50 mol%.

In addition, the lithium manganese-based oxide used herein may be defined as a composite oxide in which a molar ratio of lithium to all metal elements, excluding lithium, is higher than 1, or ranges from 1.1 to 1.6, 1.1 to 1.5, 1.2 to 1.6, or 1.2 to 1.5, and the content of manganese among all metal elements, excluding lithium, is 50 mol% or more, or a composite oxide in which a molar ratio of lithium to all metal elements, excluding lithium, is higher than 1, or ranges from 1.1 to 1.6, 1.1 to 1.5, 1.2 to 1.6, or 1.2 to 1.5, the content of manganese is 50 mol% or more and the content of nickel is less than 50 mol%, among all metal elements, excluding lithium.

Despite the differences in composition described above, the lithium manganese-based oxide may also serve as a composite metal oxide capable of intercalation/deintercalation of lithium ions.

The lithium manganese-based oxide included in the positive electrode active material defined herein may be present as an aggregate in which a plurality of primary particles are aggregated. When the lithium manganese-based oxide is present as an aggregate in which a plurality of primary particles are aggregated, the lithium manganese-based oxide may be referred to as a secondary particle.

The primary particle refers to a particle unit in which no grain boundary appears when the particle is observed at a magnification of 5,000 to 20,000 times using a scanning electron microscope.

The primary particle constituting the lithium manganese-based oxide defined herein may have an average particle diameter of 0.05 µm to 5 µm, 0.05 µm to 1.0 µm, 0.1 µm to 1.0 µm, or 0.25 µm to 0.75 µm. In this case, the average particle diameter of the primary particle may be determined by using an average value of a length in a major-axis direction and a length in a minor-axis direction ([major-axis length + minor-axis length]/2). The average particle diameter of the primary particle may be calculated as an average value of particle diameters of all primary particles observed from a surface SEM image and/or a cross-sectional SEM image of the lithium manganese-based oxide.

When an average particle diameter of the primary particle is less than 0.05 µm, a specific surface area of the lithium manganese-based oxide (secondary particle) composed of the primary particle is relatively large. In this case, a possibility of a side reaction between the lithium manganese-based oxide and an electrolyte during storage or operation of a lithium secondary battery may increase.

On the other hand, when the average particle diameter of the primary particle is greater than 5 µm, since growth of the primary particle is excessively induced, a diffusion path of lithium ions in the primary particle also becomes longer. When the diffusion path of lithium ions in the primary particle is excessively long, mobility of lithium ions in the primary particle and diffusivity of lithium ions mediated by the primary particle are reduced, which becomes a cause of increasing resistance of the lithium manganese-based oxide (secondary particle) composed of the primary particle.

Accordingly, in order to reduce the specific surface area of the lithium manganese-based oxide and simultaneously prevent a reduction in lithium ion mobility in the primary particle and lithium ion diffusivity mediated by the primary particle, the average particle diameter of the primary particle may be 0.05 µm to 5 µm, 0.05 µm to 1.0 µm, 0.1 µm to 1.0 µm, or 0.25 µm to 0.75 µm.

An average particle diameter (D₅₀) of the secondary particles may be in the range of 5.0 µm to 24.0 µm, 6.0 µm to 20.0 µm, 6.0 µm to 18.0 µm, 6.0 µm to 16.0 µm, or 6.0 µm to 15.0 µm.

The average particle diameter (D₅₀) of the secondary particle may vary depending on a number of primary particles constituting the secondary particle. The average particle diameter of the secondary particle may be measured by using a laser diffraction method. For example, after dispersing the secondary particle in a dispersion medium, the particle may be introduced into a commercially available laser diffraction particle size analyzer (for example, Microtrac MT 3000), irradiated with ultrasonic waves of about 28 kHz at an output of 60 W, and then a volume cumulative particle size distribution graph may be obtained, and a particle size corresponding to 50% of the cumulative volume may be obtained to measure the average particle diameter.

In the present disclosure, the term "particle size" is used in the same meaning as "particle diameter" or "particle size diameter," and unless otherwise defined, all "average particle diameters" refer to median volume-based particle diameters determined by a laser diffraction method.

When the lithium manganese-based oxide defined herein is used as a large particle of a positive electrode active material exhibiting a bimodal-type particle size distribution or a trimodal-type particle size distribution, the average particle diameter (D₅₀) of the secondary particle may be 5.0 µm to 24.0 µm, 6.0 µm to 20.0 µm, 6.0 µm to 18.0 µm, 6.0 µm to 16.0 µm, or 6.0 µm to 15.0 µm.

Meanwhile, when the lithium manganese-based oxide defined herein is used as an intermediate particle (a particle having an average particle diameter between that of small particles and large particles) of a positive electrode active material exhibiting a trimodal-type particle size distribution, an average particle diameter (D₅₀) of the secondary particles may be in the range of 5.0 µm to 15.0 µm, 5.0 µm to 10.0 µm, or 5.0 µm to 8.0 µm.

On the other hand, when the lithium manganese-based oxide defined herein is used as a large particle of a positive electrode active material exhibiting a trimodal-type particle size distribution, an average particle diameter (D₅₀) of the secondary particles may be in the range of 8.0 µm to 24.0 µm, 8.0 µm to 20.0 µm, or 10.0 µm to 15.0 µm.

In addition, when the positive electrode active material defined herein exhibits a bimodal-type or trimodal-type particle size distribution, an average particle diameter of the lithium manganese-based oxide provided as a small particle may be in the range of 1 µm to 8 µm, 2 µm to 6 µm, or 3 µm to 5 µm.

In general, when having a composition such as that of the lithium manganese-based oxide, the primary particles constituting the secondary particles may have a rod-like form, an elliptical form, and/or an irregular form, and various shapes of primary particles may coexist within the same secondary particle unless specifically intended during the manufacturing process. In addition, conventional lithium manganese-based oxides may also include plate-like primary particles; however, since most of the primary particles have thick plate-like forms, the lithium ion conductivity becomes low, resulting in poor capacity characteristics and rate characteristics of the positive electrode active material comprising the lithium manganese-based oxide.

In contrast, at least a portion of the primary particles constituting the lithium manganese-based oxide defined herein are characterized by having a thin plate-like form, a thin rod-like form, and/or a fine needle-like form.

Such shapes of the primary particles can be inferred from the surface shapes of the primary particles exposed on the surface of the secondary particle as observed from a surface SEM image of the secondary particle, and from the cross-sectional shapes of the primary particles as observed from a cross-sectional SEM image of the secondary particle.

The surface shapes of the primary particles exposed on the surface of the secondary particle, as observed from a surface SEM image of the secondary particle, may have a major axis and a minor axis. The surface of the secondary particle corresponds to an aggregate of the exposed surfaces of the primary particles located at the outermost region of the secondary particle.

That the surface shapes of the primary particles exposed on the surface of the secondary particle have a major axis and a minor axis indicates a high possibility that at least the primary particles exposed on the surface of the secondary particle have a thin plate-like form, a thin rod-like form, and/or a fine needle-like form.

In particular, when the major axes of the primary particles exposed on the surface of the secondary particle are arranged from the center of the secondary particle toward the surface direction to form an oriented structure, the primary particles having surface shapes with a major axis and a minor axis, as observed from a surface SEM image of the secondary particle, are highly likely to have a thin plate-like form, a thin rod-like form, and/or a fine needle-like form.

In addition, the cross-sectional shapes of the primary particles, as observed from a cross-sectional SEM image of the secondary particle, may have a major axis and a minor axis.

When the surface shapes of the primary particles exposed on the surface of the secondary particle, as observed from a surface SEM image of the secondary particle, have a major axis and a minor axis, and the cross-sectional shapes of the primary particles exposed on the surface of the secondary particle, as observed from a cross-sectional SEM image of the secondary particle, also have a major axis and a minor axis, it may indicate a high possibility that at least the primary particles exposed on the surface of the secondary particle have a thin plate-like form, a thin rod-like form, and/or a fine needle-like form.

However, even when the surface shapes of the primary particles exposed on the surface of the secondary particle, as observed from a surface SEM image, have a major axis and a minor axis, if the ratio of the major axis length to the minor axis length (major axis length/minor axis length) of the surface shapes of the primary particles exposed on the surface of the secondary particle is small (for example, close to 1), the primary particles may have a thick plate-like form or a thick rod-like form.

Accordingly, in order for the primary particles exposed on the surface of the secondary particle to have a thin plate-like form, a thin rod-like form, and/or a fine needle-like form, an average value of the ratio of the major axis length to the minor axis length (major axis length/minor axis length) of the surface shapes of the primary particles exposed on the surface of the secondary particle may be 1.5 or more and 9.0 or less, 1.6 or more and 8.0 or less, 1.7 or more and 7.0 or less, 1.8 or more and 6.0 or less, 1.9 or more and 5.7 or less, 2.0 or more and 5.5 or less, 2.1 or more and 5.3 or less, 2.2 or more and 5.2 or less, 2.3 or more and 5.1 or less, or 2.37 or more and 4.94 or less.

When the average value of the ratio of the major axis length to the minor axis length (major axis length/minor axis length) of the surface shapes of the primary particles exposed on the surface of the secondary particle is less than 1.5, the primary particles exposed on the surface of the secondary particle are less likely to have a thin plate-like form, a thin rod-like form, and/or a fine needle-like form. In addition, when the primary particles are excessively thick or excessively small in size, the average value of the ratio of the major axis length to the minor axis length (major axis length/minor axis length) of the surface shapes of the primary particles exposed on the surface of the secondary particle may be less than 1.5. When the primary particles are excessively thick, the porosity within the surface of the secondary particle may decrease and the surface kinetic characteristics may be reduced, whereas when the primary particles are excessively small in size, the specific surface area may increase, leading to an increase in side reactions between the lithium manganese-based oxide and the electrolyte.

In contrast, when the average value of the ratio of the major axis length to the minor axis length (major axis length/minor axis length) of the surface shapes of the primary particles exposed on the surface of the secondary particle is greater than 9.0, the number of excessively thin primary particles may increase, which may in turn increase the porosity within the secondary particle, thereby reducing the energy density per unit volume, or increase the specific surface area, thereby raising the risk of side reactions between the lithium manganese-based oxide and the electrolyte.

In addition, in order for the primary particles exposed on the surface of the secondary particle to have a thin plate-like form, a thin rod-like form, and/or a fine needle-like form, an average value of the ratio of the minor axis length to the major axis length (minor axis length/major axis length) of the surface shapes of the primary particles exposed on the surface of the secondary particle may be 0.2 or more and 0.5 or less, 0.21 or more and 0.49 or less, or 0.22 or more and 0.45 or less.

When the average value of the ratio of the minor axis length to the major axis length (minor axis length/major axis length) of the surface shapes of the primary particles exposed on the surface of the secondary particle is less than 0.2, the number of excessively thin primary particles may increase, which may in turn increase the porosity within the secondary particle, thereby reducing the energy density per unit volume, or increase the specific surface area, thereby raising the risk of side reactions between the lithium manganese-based oxide and the electrolyte.

In contrast, when the average value of the ratio of the minor axis length to the major axis length (minor axis length/major axis length) of the surface shapes of the primary particles exposed on the surface of the secondary particle is greater than 0.5, the primary particles exposed on the surface of the secondary particle are less likely to have a thin plate-like form, a thin rod-like form, and/or a fine needle-like form. In addition, when the primary particles are excessively thick or are excessively small in size, the average value of the ratio of the minor axis length to the major axis length (minor axis length/major axis length) of the surface shapes of the primary particles exposed on the surface of the secondary particle may be greater than 0.5. When the primary particles are excessively thick, the porosity within the surface of the secondary particle may decrease and the surface kinetic characteristics may be reduced, whereas when the primary particles are excessively small in size, the specific surface area may increase, leading to an increase in side reactions between the lithium manganese-based oxide and the electrolyte.

An average value of the major axis length of the surface shapes of the primary particles exposed on the surface of the secondary particle may be 150 nm or more and 350 nm or less, 160 nm or more and 320 nm or less, 170 nm or more and 290 nm or less, 180 nm or more and 270 nm or less, 190 nm or more and 260 nm or less, or 192 nm or more and 250 nm or less.

When the average value of the major axis length of the surface shapes of the primary particles exposed on the surface of the secondary particle is less than 150 nm, the size of the primary particles exposed on the surface of the secondary particle may be excessively small, making it difficult to reduce side reactions between the lithium manganese-based oxide and the electrolyte.

**In** contrast, when the average value of the major axis length of the surface shapes of the primary particles exposed on the surface of the secondary particle is greater than 350 nm, the size of the primary particles exposed on the surface of the secondary particle may become excessively large, thereby degrading surface kinetic characteristics such as lithium-ion conductivity.

An average value of the minor axis length of the surface shapes of the primary particles exposed on the surface of the secondary particle may be 30 nm or more and 130 nm or less, 35 nm or more and 120 nm or less, 40 nm or more and 110 nm or less, or 47 nm or more and 105 nm or less.

When the average value of the minor axis length of the surface shapes of the primary particles exposed on the surface of the secondary particle is less than 30 nm, the primary particles exposed on the surface of the secondary particle may be excessively small or excessively thin, making it difficult to reduce side reactions between the lithium manganese-based oxide and the electrolyte.

In contrast, when the average value of the minor axis length of the surface shapes of the primary particles exposed on the surface of the secondary particle is greater than 130 nm, the primary particles exposed on the surface of the secondary particle are less likely to have a thin plate-like form, a thin rod-like form, and/or a fine needle-like form. In addition, as the size of the primary particles exposed on the surface of the secondary particle becomes excessively large, surface kinetic characteristics such as lithium-ion conductivity may be degraded.

In addition, an average value of the minor axis length of the primary particles exposed on the surface of the secondary particle, as observed from a cross-sectional SEM image of the secondary particle, may be 30 nm or more and 200 nm or less. An average value of the minor axis length of the primary particles having an oriented structure, as observed from a cross-sectional SEM image of the secondary particle, may also be 30 nm or more and 200 nm or less.

When the average value of the minor axis length of the primary particles exposed on the surface of the secondary particle, as observed from a cross-sectional SEM image, is less than 30 nm, the number of excessively thin primary particles may increase, which may in turn increase the porosity within the secondary particle or reduce the energy density per unit volume.

In contrast, when the average value of the minor axis length of the primary particles exposed on the surface of the secondary particle, as observed from a cross-sectional SEM image of the secondary particle, is greater than 200 nm, the primary particles exposed on the surface of the secondary particle are less likely to have a thin plate-like form, a thin rod-like form, and/or a fine needle-like form. Accordingly, as the size of the primary particles exposed on the surface of the secondary particle becomes excessively large, surface kinetic characteristics such as lithium-ion conductivity may be degraded.

Herein, (1) the average value of the major axis length of the surface shapes of the primary particles exposed on the surface of the secondary particle, (2) the average value of the minor axis length of the surface shapes of the primary particles exposed on the surface of the secondary particle, (3) the average value of the ratio of the major axis length to the minor axis length (major axis length/minor axis length) of the surface shapes of the primary particles exposed on the surface of the secondary particle, and (4) the average value of the ratio of the minor axis length to the major axis length (minor axis length/major axis length) of the surface shapes of the primary particles may be calculated by randomly selecting 30% or more, 40% or more, 50% or more, 60% or more, 70% or more, 80% or more, or 90% or more of all the primary particles exposed on the surface of the secondary particle from a surface SEM image of the secondary particle, and measuring the major axis length and minor axis length from the surface shapes of the selected primary particles.

In order to improve the accuracy when calculating the average value from some of the primary particles exposed on the surface of the secondary particle based on a surface SEM image of the secondary particle, upper and lower groups may be excluded when selecting a portion of the primary particles from among all the primary particles exposed on the surface of the secondary particle in the surface SEM image.

For example, when selecting 40% of all the primary particles exposed on the surface of the secondary particle from a surface SEM image of the secondary particle, (1) 40% excluding the upper 30% group and the lower 30% group in terms of the major axis length of the surface shapes of the primary particles exposed on the surface of the secondary particle, (2) 40% excluding the upper 30% group and the lower 30% group in terms of the minor axis length of the surface shapes of the primary particles exposed on the surface of the secondary particle, (3) 40% excluding the upper 30% group and the lower 30% group in terms of the ratio of the major axis length to the minor axis length (major axis length/minor axis length) of the surface shapes of the primary particles exposed on the surface of the secondary particle, and (4) 40% excluding the upper 30% group and the lower 30% group in terms of the ratio of the minor axis length to the major axis length (minor axis length/major axis length) of the surface shapes of the primary particles may be selected.

Also, (1) the average value of the major axis length of the surface shapes of the primary particles exposed on the surface of the secondary particle, (2) the average value of the minor axis length of the surface shapes of the primary particles exposed on the surface of the secondary particle, (3) the average value of the ratio of the major axis length to the minor axis length (major axis length/minor axis length) of the surface shapes of the primary particles exposed on the surface of the secondary particle, and (4) the average value of the ratio of the minor axis length to the major axis length (minor axis length/major axis length) of the surface shapes of the primary particles may be calculated as the average values of the major axis length and the minor axis length measured from the surface shapes of all the primary particles exposed on the surface of the secondary particle based on a surface SEM image of the secondary particle.

Unless otherwise defined, the term "surface of the primary particle" used herein refers to an outer surface of the primary particle exposed to the outside. Similarly, the term "surface of the secondary particle" used herein refers to an outer surface of the secondary particle exposed to the outside. As described above, the "surface of the secondary particle" formed by aggregation of a plurality of primary particles corresponds to exposed surfaces of the primary particles present at a surface portion of the secondary particle.

In addition, unless otherwise defined, the term "surface portion of a particle" used herein refers to a region relatively close to an "outermost surface" of the particle, and the term "center portion of a particle" refers to a region relatively close to a "center" of the particle than the "surface portion." Accordingly, a "surface portion of a primary particle" refers to a region relatively close to an "outermost surface" of the primary particle, and a "center portion of a primary particle" refers to a region relatively close to a "center" of the primary particle than the "surface portion." Similarly, a "surface portion of a secondary particle" refers to a region relatively close to an "outermost surface" of the secondary particle, and a "center portion of a secondary particle" refers to a region relatively close to a "center" of the secondary particle than the "surface portion."

Here, a region of any particle other than the "surface portion of the particle" can be defined as a "center portion of the particle."

Herein, when a radius (r) of the lithium manganese-based oxide measured from a cross-sectional SEM image of the lithium manganese-based oxide is defined as r, a region where the distance (d) from the center of the lithium manganese-based oxide satisfies (1/2)r < d may be defined as a surface portion, and a region where the distance (d) from the center of the lithium manganese-based oxide satisfies 0 ≤ d ≤ (1/2)r may be defined as a center portion. In this case, the lithium manganese-based oxide is assumed to be a secondary particle.

Since the secondary particle may not have a perfectly spherical shape, the radius (r) of the secondary particle may be calculated from the average value of the major axis length and the minor axis length of the lithium manganese-based oxide measured from a cross-sectional SEM image of the secondary particle. That is, the radius (r) of the secondary particle may be regarded as one half of the average value of the major axis length and the minor axis length of the lithium manganese-based oxide measured from a cross-sectional SEM image of the secondary particle.

The lithium manganese-based oxide has a secondary particle form in which a plurality of primary particles are aggregated, and at least a portion of the secondary particles may have an oriented structure in which the major axes of the primary particles are arranged from the center of the secondary particle toward the surface direction.

The major axes of the primary particles exhibiting the oriented structure may be formed to have an angle within ±70°, ±60°, ±40°, ±20°, or ±10° with respect to a line connecting the center and the surface of the secondary particle. The line connecting the center and the surface of the secondary particle refers to the shortest line segment connecting the center and the surface of the secondary particle, and the major axis of the primary particle refers to the line segment having the longest length among straight lines connecting two points on the surface of the primary particle.

As at least a portion of the secondary particle has an oriented structure in which the major axes of the primary particles are arranged from the center of the secondary particle toward the surface direction, the mobility of lithium ions within the secondary particle may be increased.

The secondary particle may be divided into a core portion, in which the primary particles are randomly aggregated, and a shell portion, which is located outside the core portion and in which the primary particles exhibit the oriented structure.

The core portion is a region in which the primary particles are aggregated in a disordered manner without any specific orientation, and corresponds to the central region of the secondary particle.

When a radius (r) of the lithium manganese-based oxide (secondary particle) measured from a cross-sectional SEM image of the lithium manganese-based oxide (secondary particle) is defined as r, the core portion may be defined as a region where the distance (d) from the center of the secondary particle satisfies 0 ≤ d ≤ (1/2)r or 0 ≤ d ≤ (1/3)r.

In the core portion, since the primary particles are randomly aggregated rather than exhibiting a specific orientation, the proportion of the primary particles having the oriented structure among all the primary particles present in the core portion may be less than 50%, less than 40%, less than 30%, less than 20%, or less than 10%.

The shell portion is a region located outside the core portion in which the primary particles are arranged in an oriented structure, and corresponds to the surface portion of the secondary particle.

When a radius (r) of the lithium manganese-based oxide (secondary particle) measured from a cross-sectional SEM image of the lithium manganese-based oxide (secondary particle) is defined as r, the shell portion may be defined as a region where the distance (d) from the center of the secondary particle satisfies (1/2)r < d or (2/3)r < d.

In the shell portion, since the major axes of the primary particles are arranged from the center of the secondary particle toward the surface direction to form an oriented structure, the proportion of the primary particles having the oriented structure among all the primary particles present in the shell portion may be 50% or more, 60% or more, 70% or more, 80% or more, 85% or more, or 90% or more. An average angle between the major axes of the primary particles present in the shell portion and a line connecting the center and the surface of the secondary particle may be within ±70°, 60°, ±40°, ±20°, or ±10°.

Herein, the proportion of the primary particles having the oriented structure among all the primary particles present in the core portion or the shell portion refers to the ratio based on the number of primary particles.

In addition, the shapes of the primary particles present in the shell portion may differ from those of the primary particles present in the core portion.

For example, the ratio of the major axis length to the minor axis length (major axis length/minor axis length) of the primary particles present in the core portion, as observed from a cross-sectional SEM image of the secondary particle, may be smaller than the ratio of the major axis length to the minor axis length (major axis length/minor axis length) of the primary particles present in the shell portion.

The primary particles present in the shell portion may have a thin plate-like form, a thin rod-like form, or a fine needle-like form.

For the positive electrode active material comprising the lithium manganese-based oxide, which is an aggregate of primary particles exhibiting the above-described shapes and orientations, a BET specific surface area measured by the nitrogen adsorption method may be in the range of 1.0 m²/g to 3.5 m²/g, 1.2 m²/g to 3.4 m²/g, 1.4 m²/g to 3.3 m²/g, or 1.7 m²/g to 3.2 m²/g.

When the BET specific surface area of the lithium manganese-based oxide is greater than 3.5 m²/g, the possibility of side reactions between the lithium manganese-based oxide and the electrolyte may increase, thereby reducing the stability of the positive electrode active material comprising the lithium manganese-based oxide. In contrast, when the BET specific surface area of the lithium manganese-based oxide is less than 1.0 m²/g, the specific surface area of the lithium manganese-based oxide may become excessively small, making it difficult to improve the capacity characteristics and rate characteristics of the positive electrode active material comprising the lithium manganese-based oxide.

The lithium manganese-based oxide defined herein may be represented by Chemical Formula 1 or Chemical Formula 2 below.

[Chemical Formula 1] Li(LiₐNi_{b}Co_{c}Mn_{d}M1ₑ)O_{2-f}X_{f}

In Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X is a halogen capable of substituting a portion of oxygen present in the lithium manganese-based oxide,
0<a≤0.7, 0≤b<0.5, 0≤c≤0.2, 0.5≤d<0.8, 0<e≤0.1, and 0≤f≤0.1.

[Chemical Formula 2] rLi₂MnO₃₋ₚXₚ·(1LiᵤNi_{w}CoₓMn_{y}M2_{z}O_{2-p'}X'_{p'}

In Chemical Formula 2,
M2 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X and X' are each independently a halogen capable of substituting a portion of oxygen present in the lithium manganese-based oxide,
0.2<r≤0.7, 0<u≤1, 0≤w≤1, 0≤x≤0.2, 0.3<y<1, 0<z≤0.1, 0≤p≤0.1, and 0≤p'≤0.1.

In Chemical Formula 1 and Chemical Formula 2, X and X' are each independently a halogen element capable of substituting a portion of oxygen present in the lithium manganese-based oxide. Types of halogen usable as X and X' may be referred to in the periodic table, and F, Cl, Br, and/or I may be used, and preferably, F may be used.

In Chemical Formula 1 and Chemical Formula 2, M1 and M2 are each independently at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd; at least one selected from Al, P, Nb, B, Si, Ti, Zr, Ba, K, Mo, Ca, Mg, W, Ce, V, Ta, and Y; or at least one selected from Al, P, B, Si, Ti, Zr, and W.

The Li/Metal molar ratio measured from the lithium manganese-based oxide represented by Chemical Formula 1 or Chemical Formula 2 may be greater than 1, may be 1.1 to 1.6, may be 1.1 to 1.5, may be 1.2 to 1.6, or may be 1.2 to 1.5. The Li/Metal molar ratio measured from the lithium manganese-based oxide must be greater than at least 1 in order to form a lithium-excess lithium manganese-based oxide. In addition, in order to appropriately form a solid solution in which a phase belonging to a C2/m space group and a phase belonging to an R-3m space group coexist and to exhibit high capacity under a high-voltage operating environment, it is preferable that the Li/Metal molar ratio of the lithium manganese-based oxide be 1.1 to 1.5, 1.2 to 1.6, or 1.2 to 1.5.

In addition, in order to appropriately form a solid solution in which a phase belonging to a C2/m space group and a phase belonging to an R-3m space group coexist, it is preferable that a content of manganese among all metal elements other than lithium present in the lithium manganese-based oxide represented by Chemical Formula 1 or Chemical Formula 2 be 50 mol% or more.

In order for the lithium manganese-based oxide to have a characteristic of an OLO that exhibits high capacity under a high-voltage operating environment, a content of manganese among all metal elements other than lithium present in the lithium manganese-based oxide may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, 50 mol% or more and 75 mol% or less, 51 mol% or more and 75 mol% or less, 52 mol% or more and 75 mol% or less, 53 mol% or more and 75 mol% or less, 54 mol% or more and 75 mol% or less, or 55 mol% to 75 mol%. When a content of manganese in the lithium manganese-based oxide exceeds 80 mol%, a phase transition may occur due to migration of a transition metal (particularly manganese) in the lithium manganese-based oxide during formation and/or operation of a lithium secondary battery. Such a phase transition forms a spinel phase, and the spinel phase acting as an impurity in the lithium manganese-based oxide may cause a decrease in charge/discharge capacity or voltage decay during cycling of the lithium secondary battery. In addition, when a content of manganese in the lithium manganese-based oxide exceeds 80 mol%, it may be difficult to sufficiently form a phase belonging to the R-3m space group.

In order to appropriately form a solid solution in which a phase belonging to a C2/m space group and a phase belonging to an R-3m space group coexist, a content of nickel among all metal elements other than lithium present in the lithium manganese-based oxide represented by Chemical Formula 1 or Chemical Formula 2 may be 0% or more and less than 50 mol%, 5 mol% or more and 48 mol% or less, 10 mol% or more and 46 mol% or less, 15 mol% or more and 45 mol% or less, 20 mol% or more and 44 mol% or less, 20 mol% or more and 42 mol% or less, or 20 mol% or more and 40 mol% or less. When a content of nickel in the lithium manganese-based oxide is 50 mol% or more, it may be difficult to sufficiently form the C2/m phase, or a sufficient solid solution of a phase belonging to a C2/m space group and a phase belonging to an R-3m space group may not be formed, thereby causing phase separation during formation and/or operation of a lithium secondary battery.

The lithium manganese-based oxide represented by Chemical Formula 1 or Chemical Formula 2 may selectively include cobalt. When the lithium manganese-based oxide includes cobalt, a mole fraction of cobalt relative to a total number of moles of metal elements in the lithium manganese-based oxide may be 20% or less, 15% or less, or 10% or less. In another case, the lithium manganese-based oxide represented by Chemical Formula 1 or Chemical Formula 2 may have a cobalt-free composition in which cobalt is not included.

In general, a commercialized ternary lithium composite oxide of a nickel-cobalt-manganese (NCM) composition or a nickel-cobalt-aluminum (NCA) composition exists as a single phase belonging to the R-3m space group.

In contrast, the lithium-excess lithium manganese-based oxide represented by Chemical Formula 1 or Chemical Formula 2 exists as a composite oxide in which an oxide of a phase belonging to a C2/m space group represented by rLi₂MnO₃₋ₚXₚ (hereinafter referred to as "C2/m phase") and an oxide of a phase belonging to an R-3m space group represented by (1-r)LiᵤNi_{w}CoₓMn_{y}M2_{z}O_{2-p'}X'_{p'} (hereinafter referred to as "R-3m phase") are present as a solid solution. For example, the lithium manganese-based oxide may exist in a state in which the oxide of the C2/m phase and the oxide of the R-3m phase form a solid solution.

In this case, a composite oxide in which a phase belonging to a C2/m space group and a phase belonging to an R-3m space group are merely physically and/or chemically bonded or attached does not correspond to the solid solution as defined herein.

For example, a composite oxide having a phase belonging to the C2/m space group, whose surface is coated with a metal oxide having a phase belonging to the R-3m space group, which is formed by mixing a metal oxide having a phase belonging to the C2/m space group and a metal oxide having a phase belonging to the R-3m space group, does not correspond to a solid solution as defined herein.

In the overlithiated lithium manganese-based oxide represented by Chemical Formula 2, when r exceeds 0.7, a ratio of Li₂MnO₃, which is an oxide of a phase belonging to a C2/m space group in the lithium manganese-based oxide, becomes excessively high, and as a result, irreversible capacity and resistance of the positive electrode active material increase, thereby raising a concern of reduced discharge capacity. That is, in order to sufficiently activate an oxide of a phase belonging to a C2/m space group having relatively high resistance in the lithium manganese-based oxide and to improve surface kinetic characteristics, it is preferable that an oxide of a phase belonging to an R-3m space group be present in a predetermined ratio or more. A ratio of the phase belonging to the C2/m space group and the phase belonging to the R-3m space group in the lithium manganese-based oxide can be calculated based on a compositional ratio of lithium and a transition metal present in the lithium manganese-based oxide.

A coating layer may be present on at least a portion of the surface of the lithium manganese-based oxide. The coating layer can suppress or alleviate the elution of transition metals from the lithium manganese-based oxide. In addition, when an ion-conductive coating layer is formed on the surface of the lithium manganese-based oxide, it is possible to improve the charge-transfer and/or diffusivity (that is, surface kinetic characteristics) of lithium ions.

The coating layer may be present in the form of islands on a portion of the surface of the lithium manganese-based oxide. In addition, the coating layer may be present in a state diffused along grain boundaries between primary particles from the surface of the secondary particles toward the center of the secondary particles.

The coating layer may be present on the surface of the lithium manganese-based oxide in the form of a film having an average thickness of 1 nm to 300 nm. The thickness of the coating layer may be measured by EDX analysis for coating elements based on a cross-sectional SEM image of the lithium manganese-based oxide. The fact that the coating layer is present in the form of a film should be distinguished from a case in which oxides constituting the coating layer are dispersed and attached to the surface of the lithium manganese-based oxide in the form of individual particles.

When the average thickness of the coating layer is less than 1 nm, the surface modification effect of the lithium manganese-based oxide may be insufficient. When the average thickness of the coating layer exceeds 300 nm, the surface kinetic characteristics of the lithium manganese-based oxide may deteriorate, or its electricasssssl conductivity may be reduced.

The coating layer may comprise an oxide represented by Chemical Formula 3 below.

[Chemical Formula 3] Li_{g}M3ₕOᵢ

In Chemical Formula 3, M3 is at least one selected from Ni, Mn, Co, Al, B, Nb, Si, Ti, Zr, Ba, K, Mo, Fe, Cu, Cr, Zn, Na, Ca, Mg, Pt, Au, Eu, Sm, W, Ce, V, Ta, Sn, Hf, Gd, and Nd, 0 ≤ g ≤ 8, 0 ≤ h ≤ 8, and 2 ≤ i ≤ 13, with the exception of a case in which h and i are both 0. In addition, in Chemical Formula 3, g, h, and i represent numbers determined from a stoichiometric ratio according to a valence of M3. For example, g, h, and i may each be appropriately selected from ranges of 0 ≤ g ≤ 8, 0 ≤ h ≤ 8, and 2 ≤ i ≤ 13.

Non-limiting examples of the oxide represented by Chemical Formula 3 include Li_{g}ZrₕOᵢ, Li_{g}TiₕOᵢ, Li_{g}NiₕOᵢ, Li_{g}NbₕOᵢ, Li_{g}CoₕOᵢ, Li_{g}SiₕOᵢ, Li_{g}AlₕOᵢ, Li_{g}BₕOᵢ, CoₕOᵢ, MnₕOᵢ, AlₕOᵢ, SiₕOᵢ, ZrₕOᵢ, TiₕOᵢ, and BₕOᵢ.

### Lithium secondary battery

According to another aspect of the present invention, a positive electrode that includes a positive electrode current collector and a positive electrode active material layer formed on the positive electrode current collector may be provided. The positive electrode active material layer may include a lithium manganese-based oxide having a barrier layer formed on at least a part of the surface as a positive electrode active material according to the above-described embodiments of the present invention. In addition, the barrier layer and metal-containing nanoparticles may be independently present on the surface of the lithium manganese-based oxide.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element, (wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed to be limited by these examples.

### Preparation Example 1. Preparation of positive electrode active material

### Comparative Example 1

### (a) Preparation of Precursor

An aqueous solution in which NiSO₄·6H₂O and MnSO₄·H₂O were mixed at a molar ratio of 40:60, NaOH (aq), and NH₄OH (aq) were added to a reactor and stirred. The pH in the reactor was maintained at 10.0, and the temperature was maintained at 50°C, and a precursor synthesis reaction was carried out for 24 hours while introducing N₂ gas into the reactor. After the reaction was completed, the precursor was separated, washed with deionized water, and dried at 120°C for 10 hours to obtain a Ni_{0.4}Mn_{0.60}(OH)₂ precursor having an average particle diameter (D₅₀) of 12 µm.

### (b) First Heat Treatment

An oxide precursor was obtained by heat-treating the Ni_{0.4}Mn_{0.60}(OH)₂ precursor obtained in step (a) at 550°C for 5 hours in a calcination furnace under an O₂ atmosphere, followed by furnace cooling.

### (c) Second Heat Treatment

A mixture was prepared by mixing the oxide precursor obtained in step (b) with LiOH (Li/(metal other than Li) molar ratio = 1.25) as a lithium raw material.

Subsequently, a positive electrode active material comprising the lithium manganese-based oxide was obtained by heat-treating at 850°C for 8 hours in a calcination furnace under an O₂ atmosphere and then performing furnace cooling.

### Comparative Example 2

A positive electrode active material was prepared in the same manner as in Comparative Example 1, except that the pH in the reactor in step (a) was maintained at 9.5 and the second heat treatment temperature in step (c) was set to 900°C.

### Comparative Example 3

A positive electrode active material was prepared in the same manner as in Comparative Example 1, except that the pH in the reactor in step (a) was maintained at 9.0 and the second heat treatment temperature in step (c) was set to 900°C.

### Comparative Example 4

A positive electrode active material was prepared in the same manner as in Comparative Example 1, except that in step (a), the pH in the reactor was maintained at 8.5 and the temperature was maintained at 60°C, while a mixed gas of N₂ gas and air (N₂ (vol%):air (vol%) = 8:2) was simultaneously introduced into the reactor during the precursor synthesis reaction, and that in step (c) the second heat treatment temperature was set to 900°C.

### Comparative Example 5

A positive electrode active material was prepared in the same manner as in Comparative Example 1, except that in step (a), the pH in the reactor was maintained at 9.0 and the temperature was maintained at 60°C, while a mixed gas of N₂ gas and air (N₂ (vol%):air (vol%) = 9:1) was simultaneously introduced into the reactor during the precursor synthesis reaction, and that in step (c) the second heat treatment temperature was set to 650°C.

### Example 1

### (a) Preparation of Precursor

An aqueous solution in which NiSO₄·6H₂O and MnSO₄·H₂O were mixed at a molar ratio of 40:60, NaOH (aq), and NH₄OH (aq) were added to a reactor and stirred. The pH in the reactor was maintained at 9.0, and the temperature was maintained at 60°C, and a precursor synthesis reaction was carried out for 24 hours while simultaneously introducing N₂ gas and air (N₂ (vol%):air (vol%) = 9:1) into the reactor. After the reaction was completed, the precursor was separated, washed with deionized water, and dried at 120°C for 10 hours to obtain a Ni_{0.4}Mn_{0.60}(OH)₂ precursor having an average particle diameter (D₅₀) of 12 µm.

### (b) First Heat Treatment

An oxide precursor was obtained by heat-treating the Ni_{0.4}Mn_{0.60}(OH)₂ precursor obtained in step (a) at 550°C for 5 hours in a calcination furnace under an O₂ atmosphere, followed by furnace cooling.

### (c) Second Heat Treatment

A mixture was prepared by mixing the oxide precursor obtained in step (b) with LiOH (Li/(metal other than Li) molar ratio = 1.25) as a lithium raw material.

Subsequently, a positive electrode active material comprising the lithium manganese-based oxide was obtained by heat-treating at 900°C for 8 hours in a calcination furnace under an O₂ atmosphere and then performing furnace cooling.

### Example 2

### (a) Preparation of Precursor

An aqueous solution in which NiSO₄·6H₂O, CoSO₄·6H₂O, and MnSO₄·H₂O were mixed at a molar ratio of 40:2:58, NaOH (aq), and NH₄OH (aq) were added to a reactor and stirred. The pH in the reactor was maintained at 9.0, and the temperature was maintained at 60°C, and a precursor synthesis reaction was carried out for 24 hours while simultaneously introducing N₂ gas and air (N₂ (vol%):air (vol%) = 9:1) into the reactor. After the reaction was completed, the precursor was separated, washed with deionized water, and dried at 120°C for 10 hours to obtain a Ni_{0.4}Co_{0.02}Mn_{0.58}(OH)₂ precursor having an average particle diameter (D₅₀) of 12 µm.

### (b) First Heat Treatment

An oxide precursor was obtained by heat-treating the Ni_{0.4}Co_{0.02}Mn_{0.58}(OH)₂ precursor obtained in step (a) at 550°C for 5 hours in a calcination furnace under an O₂ atmosphere, followed by furnace cooling.

### (c) Second Heat Treatment

A mixture was prepared by mixing the oxide precursor obtained in step (b) with LiOH (Li/(metal other than Li) molar ratio = 1.25) as a lithium raw material.

Subsequently, a positive electrode active material comprising the lithium manganese-based oxide was obtained by heat-treating at 750°C for 8 hours in a calcination furnace under an O₂ atmosphere and then performing furnace cooling.

### Example 3

A positive electrode active material was prepared in the same manner as in Example 2, except that the second heat treatment temperature in step (c) was set to 850°C.

### Example 4

A positive electrode active material was prepared in the same manner as in Example 2, except that the second heat treatment temperature in step (c) was set to 900°C.

### Example 5

The lithium manganese-based oxide prepared in step (c) of Example 3 was mixed with H₃BO₃ (weighed such that the content of boron was 1.2 mol% based on the total transition metal elements of the lithium manganese-based oxide), and the mixture was heat-treated at 300°C for 8 hours in an O₂ atmosphere furnace to obtain a positive electrode active material in which a coating layer containing boron was formed on the surface of the lithium manganese-based oxide.

### Preparation Example 2. Manufacture of lithium secondary battery (half-cell)

A positive electrode slurry was prepared by dispersing 90 wt% of each positive electrode active material prepared according to Preparation Example 1, 4.5 wt% of carbon black, and 5.5 wt% of a PVDF binder in N-methyl-2 pyrrolidone (NMP).

The positive electrode slurry was uniformly applied on an aluminum thin film with a thickness of 15 µm and vacuum-dried at 135°C to manufacture a positive electrode for a lithium secondary battery in which a positive electrode active material layer is formed.

A half-cell was manufactured by using a lithium foil as a counter electrode to the positive electrode, a porous polyethylene membrane (Celgard 2300, thickness: 25 µm) as a separator, and an electrolyte in which LiPF₆ was present at a concentration of 1.15 M in a solvent including ethylene carbonate, dimethyl carbonate, and ethyl methyl carbonate mixed in a volume ratio of 2:4:4.

### Experimental Example 1. Analysis of Particle Structure of the Positive Electrode Active Material

### (1) Surface SEM Image Analysis of the Lithium Manganese-Based Oxide (Secondary Particle)

From the positive electrode active material prepared in Preparation Example 1, a total of 20 lithium manganese-based oxides in the form of secondary particles were selected, and surface SEM images of the secondary particles were obtained by scanning electron microscopy. Using an image analysis program (Image-Pro image analysis software for SEM), 30% (based on the number of primary particles) of all the primary particles exposed on the surface of the secondary particles observed from the surface SEM images were randomly selected. For the selected primary particles, the major axis length of the surface shape of each primary particle, the minor axis length of the surface shape of each primary particle, the ratio of the major axis length to the minor axis length (major axis length/minor axis length), and the ratio of the minor axis length to the major axis length (minor axis length/major axis length) were measured, and their average values were calculated.

The average values obtained from the above analysis are shown in Table 1.

### (2) Cross-Sectional SEM Image Analysis of the Lithium Manganese-Based Oxide (Secondary Particle)

From the positive electrode active material prepared in Preparation Example 1, a total of 20 lithium manganese-based oxides in the form of secondary particles were selected. The selected lithium manganese-based oxides were subjected to cross-sectioning using an ion-milling apparatus, and cross-sectional SEM images were obtained by scanning electron microscopy.

In the cross-sectional SEM images of the lithium manganese-based oxide, when the radius of the lithium manganese-based oxide measured therefrom (approximately 6 µm) is defined as r, a region where the distance (d) from the center of the lithium manganese-based oxide satisfies (2/3)r < d was defined as a shell portion. Using an image analysis program (Image-Pro image analysis software for SEM), 20 primary particles were randomly selected from among all the primary particles present in the shell portion in the cross-sectional SEM images, and the minor axis length (thickness) of the selected primary particles and the angle between the major axis of each primary particle and a line connecting the center and the surface of the secondary particle were measured. The average values of these parameters were then calculated.

For reference, the radius of the lithium manganese-based oxide was calculated as the arithmetic mean of the major axis length and the minor axis length of the lithium manganese-based oxide measured from the cross-sectional SEM images. The average angle between the major axes of the primary particles present in the shell portion and the line connecting the center and the surface of the secondary particle was calculated as the mean of the absolute values.

The average values obtained from the above analysis are shown in Table 2.

### (3) BET Specific Surface Area Analysis of the Positive Electrode Active Material

In addition, the BET specific surface area of each positive electrode active material prepared in Preparation Example 1 was calculated from the amount of nitrogen gas adsorbed at the temperature of liquid nitrogen (77 K) using a BELSORP-mini II instrument (BEL Japan).

The measurement results are shown in Table 3.

**[Table 1]**

| Classification | Major axis length (nm) | Minor axis length (nm) | Major axis length/minor axis length | Minor axis length/major axis length |
|---|---|---|---|---|
| Unit | nm | nm | - | - |
| Example 1 | 250 | 105 | 2.49 | 0.44 |
| Example 2 | 222 | 47 | 4.94 | 0.22 |
| Example 3 | 193 | 77 | 2.55 | 0.43 |
| Example 4 | 192 | 80 | 2.49 | 0.44 |
| Example 5 | 210 | 90 | 2.37 | 0.45 |
| Comparative Example 1 | 590 | 280 | 2.09 | 0.51 |
| Comparative Example 2 | 666 | 191 | 3.64 | 0.31 |
| Comparative Example 3 | 390 | 168 | 2.35 | 0.45 |
| Comparative Example 4 | 135 | 99 | 1.48 | 0.75 |
| Comparative Example 5 | 277 | 29 | 9.55 | 0.11 |

**[Table 2]**

| Classification | Minor axis length | Average angle |
|---|---|---|
| Unit | nm | ° (degree) |
| Example 1 | 112 | 32.5 |
| Example 2 | 57 | 22.5 |
| Example 3 | 84 | 30.2 |
| Example 4 | 109 | 34.7 |
| Example 5 | 117 | 35.5 |
| Comparative Example 1 | 621 | Not measurable |
| Comparative Example 4 | 127 | Not measurable |

Unlike in Examples 1 to 5, in Comparative Examples 1 and 4, the primary particles present in the shell portion of the lithium manganese-based oxide (secondary particle) were randomly aggregated rather than exhibiting a specific orientation, and therefore, the average angle between the major axis of each primary particle and a line connecting the center and the surface of the secondary particle could not be calculated.

**[Table 3]**

| Classification | BET specific surface area |
|---|---|
| Unit | m²/g |
| Example 1 | 1.7 |
| Example 2 | 3.2 |
| Example 3 | 2.5 |
| Example 4 | 1.8 |
| Example 5 | 2.2 |
| Comparative Example 1 | 0.4 |
| Comparative Example 2 | 0.7 |
| Comparative Example 3 | 0.8 |
| Comparative Example 4 | 0.6 |
| Comparative Example 5 | 5.8 |

### Experimental Example 2. Evaluation of electrochemical properties of lithium secondary battery (half-cell)

For the lithium secondary batteries (half-cell) manufactured in Preparation Example 2, charge/discharge experiments were conducted using an electrochemical analysis device (Toscat-3100 from TOYO SYSTEM CO., LTD.) at 25 °C, a voltage ranging from 2.0 V to 4.6 V, and a discharge rate of 0.1 C to 2.0 C to measure charge capacity, discharge capacity, and rate characteristic (discharge capacity rate; rate capability (C-rate)).

The measurement results are shown in Table 2 below.

**[Table 2]**

| Classification | Charge capacity | Discharge capacity | Discharge capacity rate (2.0C/0.1C) |
|---|---|---|---|
| Unit | mAh/g | mAh/cc | % |
| Example 1 | 259.6 | 230.5 | 81.0 |
| Example 2 | 248.4 | 229.3 | 62.3 |
| Example 3 | 255.8 | 234.6 | 80.3 |
| Example 4 | 250.9 | 226.2 | 81.3 |
| Example 5 | 254.2 | 235.1 | 81.1 |
| Comparative Example 1 | 156.5 | 116.7 | 15.4 |
| Comparative Example 2 | 218.3 | 189.9 | 56.5 |
| Comparative Example 3 | 217.4 | 189.1 | 53.3 |
| Comparative Example 4 | 213.2 | 189.8 | 49.1 |
| Comparative Example 5 | 213.0 | 198.4 | 39.8 |

Comparing the results of Examples 1 to 5 and Comparative Examples 1 and 2, it can be confirmed that, when at least a portion of the lithium manganese-based oxide (for example, the shell portion of the secondary particle) has an oriented structure in which the major axes of the primary particles are arranged from the center of the secondary particle toward the surface direction, the surface kinetic characteristics of the lithium manganese-based oxide are improved, thereby contributing to the enhancement of charge/discharge capacity and rate characteristics.

Furthermore, comparing the results of Examples 1 to 5 and Comparative Examples 1 to 5, it can be confirmed that, since the primary particles present on the surface of the lithium manganese-based oxide have an appropriate degree of thin plate-like form, thin rod-like form, or fine needle-like form, the porosity within the lithium manganese-based oxide is controlled to provide an appropriate level of BET specific surface area. Accordingly, as the surface kinetic characteristics of the lithium manganese-based oxide are improved, the charge/discharge capacity and rate characteristics can also be enhanced.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A positive electrode active material comprising:
a lithium manganese-based oxide in which a phase belonging to a C2/m space group and a phase belonging to an R-3m space group are present as a solid solution,
wherein the lithium manganese-based oxide has a secondary particle form in which a plurality of primary particles are aggregated, and
at least a portion of the secondary particles has an oriented structure in which the major axes of the primary particles are arranged from the center of the secondary particle toward the surface direction.

2. The positive electrode active material of claim 1, wherein surface shapes of the primary particles exposed on the surface of the secondary particle, as observed from a surface SEM image of the secondary particle, have a major axis and a minor axis.

3. The positive electrode active material of claim 2, wherein an average value of the ratio of the major axis length to the minor axis length (major axis length/minor axis length) of the surface shapes of the primary particles exposed on the surface of the secondary particle is 1.5 or more and 9.0 or less.

4. The positive electrode active material of claim 1, wherein an average value of the ratio of the minor axis length to the major axis length (minor axis length/major axis length) of the surface shapes of the primary particles exposed on the surface of the secondary particle is 0.2 or more and 0.5 or less.

5. The positive electrode active material of claim 1, wherein an average value of the major axis length of the surface shapes of the primary particles exposed on the surface of the secondary particle is 150 nm or more and 350 nm or less.

6. The positive electrode active material of claim 1, wherein an average value of the minor axis length of the surface shapes of the primary particles exposed on the surface of the secondary particle is 30 nm or more and 130 nm or less.

7. The positive electrode active material of claim 1, wherein the major axes of the primary particles exhibiting the oriented structure are formed to have an angle within ±70° with respect to a line connecting the center and the surface of the secondary particle.

8. The positive electrode active material of claim 1, wherein an average value of the minor axis length of the primary particles having the oriented structure, as observed from a cross-sectional SEM image of the secondary particle, is 30 nm or more and 200 nm or less.

9. The positive electrode active material of claim 1, wherein the secondary particle is divided into a core portion, in which the primary particles are randomly aggregated, and a shell portion located outside the core portion, in which the primary particles exhibit the oriented structure.

10. The positive electrode active material of claim 9, wherein a proportion of the primary particles having the oriented structure among all the primary particles present in the shell portion is 50% or more.

11. The positive electrode active material of claim 9, wherein a proportion of the primary particles having the oriented structure among all the primary particles present in the core portion is less than 50%.

12. The positive electrode active material of claim 1, wherein a BET specific surface area measured by the nitrogen adsorption method is in the range of 1.0 m²/g to 3.5 m²/g.

13. The positive electrode active material of claim 1, wherein the lithium manganese-based oxide is a composite oxide of lithium, nickel, and manganese.

14. The positive electrode active material of claim 13, wherein the lithium manganese-based oxide further comprises one or more elements selected from alkali metals, alkaline earth metals, transition metals other than nickel and manganese, post-transition metals, and metalloids.

15. The positive electrode active material of claim 1, wherein the lithium manganese-based oxide is represented by Chemical Formula 1 below:
[Chemical Formula 1] Li(LiₐNi_{b}Co_{c}Mn_{d}M1ₑ)O_{2-f}X_{f}
In Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X is a halogen capable of substituting a portion of oxygen present in the lithium manganese-based oxide,
0<a≤0.7, 0≤b<0.5, 0≤c≤0.2, 0.5≤d<0.8, 0<e≤0.1, and 0≤f≤0.1.

16. The positive electrode active material of claim 1, wherein the lithium manganese-based oxide is represented by the following Formula 2:
[Chemical Formula 2] rLi₂MnO₃₋ₚXₚ·(1-r)LiᵤNi_{w}CoₓMn_{y}M2_{z}O_{2-p'}X'_{p'}
In Chemical Formula 2,
M2 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X and X' are each independently a halogen capable of substituting a portion of oxygen present in the lithium manganese-based oxide,
0.2<r≤0.7, 0<u≤1, 0≤w≤1, 0≤x≤0.2, 0.3<y<1, 0<z≤0.1, 0≤p≤0.1, and 0≤p'≤0.1.

17. A positive electrode comprising the positive electrode active material of any one of claims 1 to 16.

18. A lithium secondary battery comprising the positive electrode of claim 17.
